# EUROPÄISCHE PATENTANMELDUNG

(11) **EP 4 365 803 A2**
(43) Veröffentlichungstag der Anmeldung: **08.05.2024**
(21) Anmeldenummer: 24150399.4
(22) Anmeldetag: 25.06.2014
(51) Int. Cl.: G06Q 10/10

(54) **PLATTFORM-VORRICHTUNG ZUR BEREITSTELLUNG QUALITATIVEN SCHWARM-WISSENS**

(30) Priorität: 28.11.2013 WO PCT/DE2013/100400
(62) Teilanmeldung aus: 14754993.5
(71) Anmelder: Faulwetter, Patrick, Marina del Rey, CA 90292 (US)
(72) Erfinder: Die Erfindernennung liegt noch nicht vor
(74) Vertreter: Kiessling, Christian

(57) **Zusammenfassung**

Bei einer mit einer Mehrzahl mittels einer Kennung identifizierbarer Nutzer-Teilnehmer vernetzbare webplatzierte Plattform-Vorrichtung (100) zum Sammeln und Bearbeiten von auf einer Mehrzahl von jeweils mittels einer vorgebbaren Kodierung identifizierbaren und jeweils einem vorgegebenen Thema zugeordneten Speicherplätzen (110) einer Plattform gespeicherten Informationen seitens der Nutzer-Teilnehmer, wird eine seitens der Nutzer-Teilnehmer konsensfähige Bewertbarkeit und Änderbarkeit der gespeicherten Informationen unter Ausprägung von Schwarm-Wissen dadurch erreicht, dass die in eine Vielzahl von Themen unterteilten Speicherplätze (110) auf der Plattform (100) jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz (111) sowie einen dem ersten Speicherplatz (111) zugeordneten zweiten Speicherplatz (112) umfasst, der seitens eines jeden einzelnen Nutzer-Teilnehmers editierbar ist und für eine Eingabe von Zusatz-Informationen bezüglich der auf dem ersten Speicherplatz (111) gespeicherten Initial-Information seitens der Mehrzahl von Nutzer-Teilnehmern ausgelegt ist.

## Beschreibung

Die vorliegende Erfindung betrifft eine mit einer Mehrzahl mittels einer Kennung identifizierbarer Nutzer-Teilnehmer vernetzbare web-platzierte Plattform-Vorrichtung zum Sammeln und Bearbeiten von auf einer Mehrzahl von jeweils mittels einer vorgebbaren Kodierung identifizierbaren und jeweils einem vorgegebenen Thema zugeordneten Speicherplätzen einer Plattform gespeicherten Informationen seitens der Nutzer-Teilnehmer.

Plattform-Vorrichtungen der eingangs genannten Art sind im Stand der Technik für eine Vielzahl von Anwendungen bekannt. Unter anderem werden sie auch im weltweiten Internet betrieben. Die bekannten Plattform-Vorrichtungen weisen indes den Nachteil auf, dass eine spezielle Auswahl vorgebbarer Verknüpfungen, und dabei nach vorgebbaren Kriterien durchführbare Verknüpfungen nicht realisierbar sind. Die Ursache dafür ist unter anderem darin zu sehen, dass die derzeitigen Plattformen Informationen speichern, ohne dass diesen Informationen streng vorgebbare Bearbeitungskriterien und streng vorgebbare Evaluierungs-Kriterien beigemessen werden.

Aufgabe der Erfindung ist es deshalb, eine Plattform-Vorrichtung zu schaffen, mittels derer unter Bereitstellung von Schwarm-Intelligenz in einem ersten Speicher gespeicherte Informationen nach streng vorgebbaren Bearbeitungskriterien seitens der Netz-Teilnehmer bewertbar, und bei Feststellen eines Konsens seitens der Netz-Teilnehmer, mit Zusätzen versehbar oder änderbar sind.

Für eine Plattform-Vorrichtung der eingangs genannten Art wird diese Aufgabe dadurch gelöst, dass die in eine Vielzahl von Themen unterteilten Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist.

Bevorzugte Ausführungsformen der Erfindung sind Gegenstand der Unteransprüche.

Bei der erfindungsgemäßen Plattform-Vorrichtung wird durch die Merkmalskombination, dass die in eine Vielzahl von Themen unterteilten Speicherplätze auf der Plattform jeweils von einer dualen Einheit (DuU) gebildet sind, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz sowie einen dem ersten Speicherplatz zugeordneten zweiten Speicherplatz umfasst, der seitens eines jeden einzelnen Nutzer-Teilnehmers editierbar ist und für eine Eingabe von Zusatz-Informationen bezüglich der auf dem ersten Speicherplatz gespeicherten Initial-Information seitens der Mehrzahl von Nutzer-Teilnehmern ausgelegt ist, erreicht, dass über eine Bildung dualer Einheiten Informationen bezüglich sehr spezifischer Bearbeitungsvorgaben bewertbar, bearbeitbar, änderbar und dann speicherbar sind, wobei Informationen jeglicher Art für eine Bewertung und Bearbeitung in Frage kommen, und wobei die jeweiligen Informationen zum Zweck einer Auffindbarkeit in eine Vielzahl unterschiedlicher Themen unterteilt sind.

Ziel und Zweck eines von der Mehrzahl der Nutzer-Teilnehmer durchführbaren Bearbeitungsvorgangs ist es dabei zuförderst, eine von einem Initial-Autor unter einem ersten Speicherplatz einer dualen Einheit eingelesene Initial-Information seitens der Nutzer-Teilnehmer bewertbar und bearbeitbar zu machen, um die Initial-Information mit einer Verlässlichkeits-Benotung bzw. Verlässlichkeits-Bewertung zu versehen, die am Ende eines erfindungsgemäß durchgeführten Bearbeitungsvorgangs in den ersten Speicherplatz eingetragen ist und für die Allgemeinheit eine übersichtliche Schwarm-Bewertung seitens der Nutzer-Teilnehmer darstellt.

Gemäß einer ersten bevorzugten Ausführungsform der erfindungsgemäßen Vorrichtung ist vorgesehen, dass in dem editierbaren zweiten Speicherplatz Zusatz-Informationen in Form mittels mindestens einer Berechnungs-Einrichtung ermittelter, qualitativer Bewertungen der auf dem ersten Speicherplatz gespeicherten Informationen seitens der Nutzer-Teilnehmer einlesbar und jeweils in einem betreffenden Speicher speicherbar sind, wobei die mindestens eine Berechnungs-Einrichtung ausgelegt ist, um aufgrund eingelesener qualitativer Einzel-Bewertungen eine Schwarm-Bewertungs-Information zu erstellen.

Vorzugsweise ist die mindestens eine Berechnungs-Einrichtung ausgelegt, um eine qualitative Bewertung mittels einer jedem Nutzer-Teilnehmer in den zweiten Speicherplatz ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind. Die Punkteskala kann dabei beispielsweise ausgelegt sein, um eine Vergabe von Punkten zwischen 0 und 100 seitens eines jeden der Nutzer-Teilnehmer zu ermöglichen.

Gemäß einer wichtigen bevorzugten Ausführungsform der erfindungsgemäßen Vorrichtung ist die erste Berechnungs-Einrichtung vorgesehen, um eine Mittelwertbildung bezüglich der summarisch auf dem zweiten Speicherplatz eingelesenen, von jeweils n unterschiedlichen Nutzer-Teilnehmern vergebenen Punkte durchzuführen und die betreffende Zahl in dem zweiten Speicherplatz zu speichern, wobei ein Punkte-Mittelwert berechnet wird durch Addition aller Punkte zwischen 0 und einer maximalen Punktezahl, die n Nutzer-Teilnehmer im Wege einer jeweiligen Bewertung vergeben haben, geteilt durch die Anzahl von n Nutzer-Teilnehmern, die jeweils eine Bewertung abgegeben haben.

Gemäß einer anderen wichtigen bevorzugten Ausführungsform der erfindungsgemäßen Vorrichtung ist eine zweite Berechnungs-Einrichtung vorgesehen, die eine Varianzbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei die Varianz als mittlere Punkte-Differenz zu dem seitens der ersten Berechnungs-Einrichtung ermittelten Punkte-Mittelwert definiert ist.

Des Weiteren ist vorzugsweise eine erste Kopier-Einrichtung vorgesehen, die sukzessive hintereinander die innerhalb vorgebbarer Zeitabschnitte auf dem zweiten Speicherplatz gespeicherten qualitativen Bewertungen als nützliche Informationen interpretiert und auf den ersten Speicherplatz überträgt und die diesbezüglichen vorherigen Informationen auf dem ersten Speicherplatz überschreibt. Auf diese Weise ist eine Schwarm-Evaluations-Information bezüglich einer Inhalts-Information geschaffen.

Ebenfalls vorzugsweise ist eine Zeitgeber-Einrichtung vorgesehen, die in vorgebbaren konstanten Zeitabschnitten an die erste und zweite Berechnungs-Einrichtung sowie die erste Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Gemäß einer den obigen Ausführungsformen ähnlichen, jedoch konzeptionell leicht unterschiedlichen Ausführungsform der erfindungsgemäßen Vorrichtung ist der editierbare zweite Speicherplatz unterteilt in einen Inhalts-Speicherplatz, in den Zusatzinformationen zu den auf dem ersten Speicherplatz gespeicherten Informationen in Form von Ergänzungs-Informationen der auf dem ersten Speicherplatz gespeicherten Informationen einlesbar sind, und einen Bewertungs-Speicherplatz, in den qualitative Bewertungen der auf dem zweiten Speicherplatz gespeicherten Ergänzungs-Informationen seitens der Nutzer-Teilnehmer einlesbar sind, wobei mindestens eine weitere Berechnungs-Einrichtung vorgesehen ist, um aufgrund eingelesener qualitativer Bewertungen eine Schwarm-Bewertungs-Information zu erstellen.

Die mindestens eine weitere Berechnungs-Einrichtung ist vorzugsweise ausgelegt, um eine qualitative Schwarm-Bewertung mittels einer jedem Nutzer-Teilnehmer in den zweiten Speicherplatz ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind. Die Punkteskala kann dabei wieder bemessen sein, um eine Vergabe von Punkten zwischen 0 und 100 seitens eines jeden der Nutzer-Teilnehmer zu ermöglichen.

Gemäß einer wichtigen bevorzugten Ausführungsform dieser erfindungsgemäßen Vorrichtung ist daher eine dritte Berechnungs-Einrichtung vorgesehen, die eine Mittelwertbildung bezüglich der summarisch auf dem zweiten Speicherplatz eingelesenen, von jeweils n unterschiedlichen Nutzer-Teilnehmern vergebenen Punkte vornimmt und die betreffende Zahl in dem zweiten Speicherplatz speichert, wobei ein Punkte-Mittelwert berechnet wird durch Addition aller Punkte zwischen 0 und einer maximalen Punktezahl, die n Nutzer-Teilnehmer im Wege einer jeweiligen Bewertung einer Ergänzungs-Information vergeben haben, geteilt durch die Anzahl von n Nutzer-Teilnehmern, die jeweils eine Bewertung einer Ergänzungs-Information abgegeben haben.

Ebenfalls gemäß einer wichtigen bevorzugten Ausführungsform dieser erfindungsgemäßen Vorrichtung ist des weiteren eine vierte Berechnungs-Einrichtung vorgesehen, die eine Varianzbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei die Varianz als mittlere Punkte-Differenz zu dem seitens der dritten Berechnungs-Einrichtung ermittelten Punkte-Mittelwert der Bewertung einer Ergänzungs-Information definiert ist.

Vorzugsweise ist dabei eine zweite Kopier-Einrichtung vorgesehen ist, die sukzessive hintereinander am Endpunkt vorgebbarer Zeitabschnitte die auf dem zweiten Speicherplatz gespeicherten qualitativen Bewertungen einer Ergänzungs-Information abhängig von vorherbestimmten Vorgaben betreffend Mittelwert und Varianz in einer ersten Entscheider-Einrichtung als nützliche oder unnützliche Informationen interpretiert und die Ergänzungs-Information im Falle des Ermittelns einer nützlichen Information auf den ersten Speicherplatz überträgt. Auf diese Weise ist eine Evaluations-Information bezüglich einer Ergänzungs-Information geschaffen.

Auch hier kann vorzugsweise eine Zeitgeber-Einrichtung vorgesehen sein, die in vorgebbaren konstanten Zeitabschnitten an die dritte und vierte Berechnungs-Einrichtung sowie die zweite Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Gemäß einer den obigen Ausführungsformen ähnlichen, jedoch konzeptionell leicht unterschiedlichen anderen Ausführungsform der erfindungsgemäßen Vorrichtung ist der editierbare zweite Speicherplatz unterteilt in einen Inhalts-Speicherplatz, in den Zusatzinformationen zu den auf dem ersten Speicherplatz gespeicherten Informationen in Form von Ergänzungs-Informationen der auf dem ersten Speicherplatz gespeicherten Informationen einlesbar sind, und einen Bewertungs-Speicherplatz, in den qualitative Bewertungen der auf dem zweiten Speicherplatz gespeicherten Ergänzungs-Informationen seitens der Nutzer-Teilnehmer einlesbar sind, wobei mindestens eine Berechnungs-Einrichtung vorgesehen ist, um aufgrund eingelesener qualitativer Bewertungen eine Schwarm-Bewertungs-Information zu erstellen.

Die mindestens eine weitere Berechnungs-Einrichtung ist vorzugsweise ausgelegt, um eine qualitative Schwarm-Bewertung mittels einer jedem Nutzer-Teilnehmer in den zweiten Speicherplatz ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher speicherbar sind. Die Punkteskala beläuft sich ebenfalls vorzugsweise um eine Vergabe von Punkten zwischen 0 und 100 seitens eines jeden der Nutzer-Teilnehmer.

Gemäß einer wichtigen bevorzugten Ausführungsform dieser erfindungsgemäßen Vorrichtung ist dabei eine fünfte Berechnungs-Einrichtung vorgesehen, die eine Mittelwertbildung bezüglich der summarisch auf dem zweiten Speicherplatz eingelesenen, von jeweils n unterschiedlichen Nutzer-Teilnehmern vergebenen Punkte vornimmt und die betreffende Zahl in dem zweiten Speicherplatz speichert, wobei ein Punkte-Mittelwert berechnet wird durch Addition aller Punkte zwischen 0 und einer maximalen Punktezahl, die n Nutzer-Teilnehmer im Wege einer jeweiligen Bewertung einer Korrektur-Information vergeben haben, geteilt durch die Anzahl von n Nutzer-Teilnehmern, die jeweils eine Bewertung einer Korrektur-Information abgegeben haben.

Ebenfalls gemäß einer wichtigen bevorzugten Ausführungsform dieser erfindungsgemäßen Vorrichtung ist eine sechste Berechnungs-Einrichtung vorgesehen, die eine Varianzbildung bezüglich der summarisch auf dem zweiten Speicherplatz eingelesenen, von jeweils unterschiedlichen Nutzer-Teilnehmern vergebenen Punkte vornimmt und die betreffende Zahl in dem zweiten Speicherplatz speichert, wobei die Varianz als mittlere Punkte-Differenz zu dem seitens der fünften Berechnungs-Einrichtung ermittelten Punkte-Mittelwert der Bewertung einer Korrektur-Information definiert ist.

Vorzugsweise ist dabei eine dritte Kopier-Einrichtung vorgesehen, die sukzessive hintereinander am Endpunkt vorgebbarer Zeitabschnitte die auf dem zweiten Speicherplatz gespeicherten qualitativen Bewertungen einer Korrektur-Information abhängig von vorherbestimmten Vorgaben betreffend Mittelwert und Varianz in einer ersten Entscheider-Einrichtung als nützliche oder unnützliche Informationen interpretiert und die Korrektur-Information im Falle des Ermittelns einer nützlichen Information auf den ersten Speicherplatz überträgt und die diesbezüglichen vorherigen Informationen auf dem ersten Speicherplatz überschreibt. Auf diese Weise ist eine Evaluations-Information bezüglich einer Korrektur- Information geschaffen.

Auch hier kann vorzugsweise eine Zeitgeber-Einrichtung vorgesehen sein, die in vorgebbaren konstanten Zeitabschnitten an die fünfte und sechste Berechnungs-Einrichtung sowie die dritte Kopier-Einrichtung Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Vorzugsweise ist jedem der Teilnehmer eine Erstplatzierung einer dualen Einheit ermöglicht.

Die erfindungsgemäße Plattform-Vorrichtung wird im Folgenden anhand einer bevorzugten Ausführungsform erläutert, die in den Figuren der Zeichnung dargestellt ist. Es zeigen:

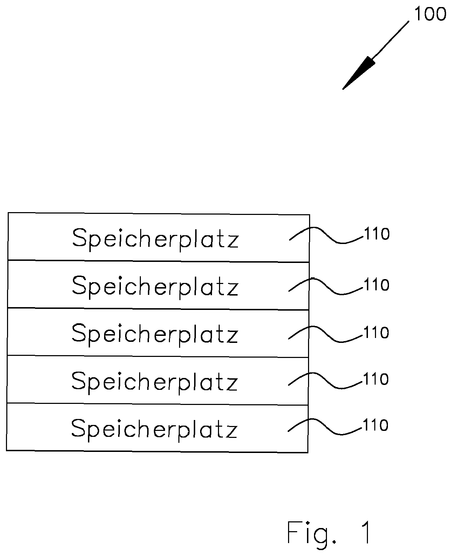

- Fig. 1: in eine Mehrzahl unterschiedlicher Themen unterteilte Speicherplätze 110 der erfindungsgemäßen Plattform-Vorrichtung 100 in Form eines Blockdiagramms;
- Fig. 2: eine prinzipielle Ausgestaltung einer dualen Einheit (DuU) entsprechend einer ersten bevorzugten Ausführungsform der Erfindungsgemäßen Plattform-Vorrichtung in Form eines Blockdiagramms.
- Fig. 3: eine prinzipielle Ausgestaltung einer dualen Einheit (DuU) entsprechend einer zweiten bevorzugten Ausführungsform der Erfindungsgemäßen Plattform-Vorrichtung in Form eines Blockdiagramms.

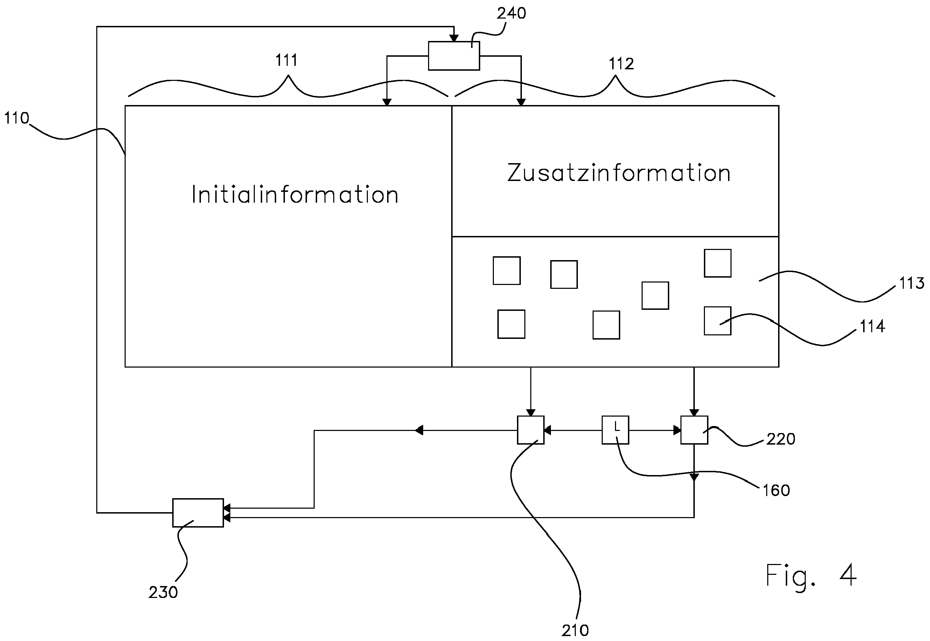

- Fig. 4: eine prinzipielle Ausgestaltung einer dualen Einheit (DuU) entsprechend einer dritten bevorzugten Ausführungsform der Erfindungsgemäßen Plattform-Vorrichtung in Form eines Blockdiagramms.

Die erfindungsgemäße web-platzierte Plattform-Vorrichtung 100 ist mit einer Mehrzahl mittels einer Kennung identifizierbarer Nutzer-Teilnehmer vernetzbar und zum Sammeln und Bearbeiten von auf einer Mehrzahl von jeweils mittels einer vorgebbaren Kodierung identifizierbaren und jeweils einem vorgegebenen Thema zugeordneten Speicherplätzen 110 einer Plattform gespeicherten Informationen seitens der Nutzer-Teilnehmer ausgelegt.

Die in eine Vielzahl unterschiedlicher Themen unterteilten Speicherplätze 110 sind auf der Plattform jeweils von einer dualen Einheit (DuU) gebildet, wobei eine duale Einheit (DuU) jeweils einen einem vorgebbaren Thema zugeordneten und mit seitens eines Initial-Teilnehmers formulierten Initial-Informationen versehenen, seitens eines einzelnen Nutzer-Teilnehmers nicht editierbaren ersten Speicherplatz 111 sowie einen dem ersten Speicherplatz 111 zugeordneten zweiten Speicherplatz 112 umfasst, der seitens eines jeden einzelnen Nutzer-Teilnehmers editierbar ist und für eine Eingabe von Zusatz-Informationen bezüglich der auf dem ersten Speicherplatz 111 gespeicherten Initial-Information seitens der Mehrzahl von Nutzer-Teilnehmern ausgelegt ist.

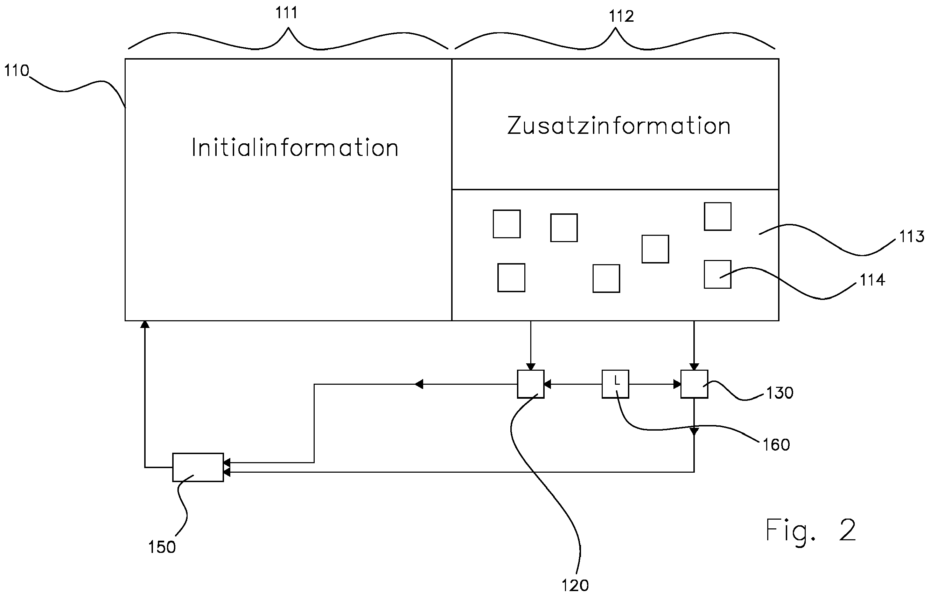

Gemäß der in Figur 2 dargestellten Ausführungsform der erfindungsgemäßen Plattform-Vorrichtung 100 sind in dem editierbaren zweiten Speicherplatz 112 Zusatz-Informationen in Form mittels mindestens einer Berechnungs-Einrichtung 120, 130 ermittelter, qualitativer Bewertungen der auf dem ersten Speicherplatz 111 gespeicherten Informationen seitens der Nutzer-Teilnehmer einlesbar und speicherbar, wobei die mindestens eine Berechnungs-Einrichtung 120 ausgelegt ist, um aufgrund eingelesener qualitativer Einzel-Bewertungen eine Schwarm-Bewertungs-Information zu erstellen.

Dabei ist eine erste Berechnungs-Einrichtung 120 vorgesehen, um eine qualitative Bewertung mittels einer jedem Nutzer-Teilnehmer in den zweiten Speicherplatz 112 ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher 114 speicherbar sind. Die Punkteskala erlaubt dabei eine Vergabe von Punkten zwischen 0 und 100 seitens eines jeden der Nutzer-Teilnehmer.

Die erste Berechnungs-Einrichtung 120 ist vorgesehen, die eine Mittelwertbildung bezüglich der summarisch auf dem zweiten Speicherplatz 112 eingelesenen, von jeweils n unterschiedlichen Nutzer-Teilnehmern vergebenen Punkte vornimmt und die betreffende Zahl in dem zweiten Speicherplatz 112 speichert, wobei ein Punkte-Mittelwert berechnet wird durch Addition aller Punkte zwischen 0 und 100, die n Nutzer-Teilnehmer im Wege einer jeweiligen Bewertung vergeben haben, geteilt durch die Anzahl von n Nutzer-Teilnehmern, die jeweils eine Bewertung abgegeben haben.

Eine zweite Berechnungs-Einrichtung 130 ist vorgesehen, die eine Varianzbildung bezüglich der summarisch auf dem zweiten Speicherplatz 112 eingelesenen, von jeweils unterschiedlichen Nutzer-Teilnehmern vergebenen Punkte vornimmt und die betreffende Zahl in dem zweiten Speicherplatz 112 speichert, wobei die Varianz als mittlere Punkte-Differenz zu dem seitens der ersten Berechnungs-Einrichtung 120 ermittelten Punkte-Mittelwert definiert ist.

Des Weiteren ist eine erste Kopier-Einrichtung 150 vorgesehen, die sukzessive hintereinander die innerhalb vorgebbarer Zeitabschnitte auf dem zweiten Speicherplatz 112 gespeicherten qualitativen Bewertungen als nützliche Informationen interpretiert und auf den ersten Speicherplatz 111 überträgt und die diesbezüglichen vorherigen Informationen auf dem ersten Speicherplatz 111 überschreibt. Auf diese Weise ist eine Evaluations-Information bezüglich einer Inhalts-Information geschaffen.

Eine Zeitgeber-Einrichtung 160 ist vorgesehen, die in vorgebbaren konstanten Zeitabschnitten an die erste 120 und zweite Berechnungs-Einrichtung 130 sowie die erste Kopier-Einrichtung 150 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Gemäß der in Figur 2 dargestellten Ausführungsform der erfindungsgemäßen Vorrichtung 100 ist der editierbare zweite Speicherplatz 112 unterteilt in einen Inhalts-Speicherplatz, in den Zusatzinformationen zu den auf dem ersten Speicherplatz 111 gespeicherten Informationen in Form von Ergänzungs-Informationen der auf dem ersten Speicherplatz 111 gespeicherten Informationen einlesbar sind, und einen Bewertungs-Speicherplatz 113, in den qualitative Bewertungen der auf dem zweiten Speicherplatz 112 gespeicherten Ergänzungs-Informationen seitens der Nutzer-Teilnehmer einlesbar sind, wobei mindestens eine Berechnungs-Einrichtung 120 vorgesehen ist, um aufgrund eingelesener qualitativer Bewertungen eine Schwarm-Bewertungs-Information zu erstellen.

Eine weitere Berechnungs-Einrichtung 130 ist ausgelegt, um eine qualitative Schwarm-Bewertung mittels einer jedem Nutzer-Teilnehmer in den zweiten Speicherplatz 112 ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher 114 speicherbar sind. Die Punkteskala ist dabei wiederum bemessen, um eine Vergabe von Punkten zwischen 0 und 100 seitens eines jeden der Nutzer-Teilnehmer zu ermöglichen.

Eine dritte Berechnungs-Einrichtung 170 ist vorgesehen, um eine Mittelwertbildung bezüglich der summarisch auf dem zweiten Speicherplatz 112 eingelesenen, von jeweils n unterschiedlichen Nutzer-Teilnehmern vergebenen Punkte durchzuführen und die betreffende Zahl in dem zweiten Speicherplatz 112 zu speichern, wobei ein Punkte-Mittelwert berechnet wird durch Addition aller Punkte zwischen 0 und 100, die n Nutzer-Teilnehmer im Wege einer jeweiligen Bewertung einer Ergänzungs-Information vergeben haben, geteilt durch die Anzahl von n Nutzer-Teilnehmern, die jeweils eine Bewertung einer Ergänzungs-Information abgegeben haben.

Des Weiteren ist eine vierte Berechnungs-Einrichtung 180 vorgesehen, die eine Varianzbildung bezüglich der summarisch auf dem zweiten Speicherplatz 112 eingelesenen, von jeweils unterschiedlichen Nutzer-Teilnehmern vergebenen Punkte vornimmt und die betreffende Zahl in dem zweiten Speicherplatz 112 speichert, wobei die Varianz als mittlere Punkte-Differenz zu dem seitens der dritten Berechnungs-Einrichtung 170 ermittelten Punkte-Mittelwert der Bewertung einer Ergänzungs-Information definiert ist.

Ebenfalls vorgesehen ist eine zweite Kopier-Einrichtung 190 vorgesehen, die sukzessive hintereinander am Endpunkt vorgebbarer Zeitabschnitte die auf dem zweiten Speicherplatz 112 gespeicherten qualitativen Bewertungen einer Ergänzungs-Information abhängig von vorherbestimmten Vorgaben betreffend Mittelwert und Varianz in einer ersten Entscheider-Einrichtung 200 als nützliche oder unnützliche Informationen interpretiert und die Ergänzungs-Information im Falle des Ermittelns einer nützlichen Information auf den ersten Speicherplatz 111 überträgt. Auf diese Weise ist eine Evaluations-Information bezüglich einer Ergänzungs-Information geschaffen.

Eine Zeitgeber-Einrichtung 160 ist vorgesehen, die in vorgebbaren konstanten Zeitabschnitten an die dritte 170 und vierte Berechnungs-Einrichtung 180 sowie die zweite Kopier-Einrichtung 190 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

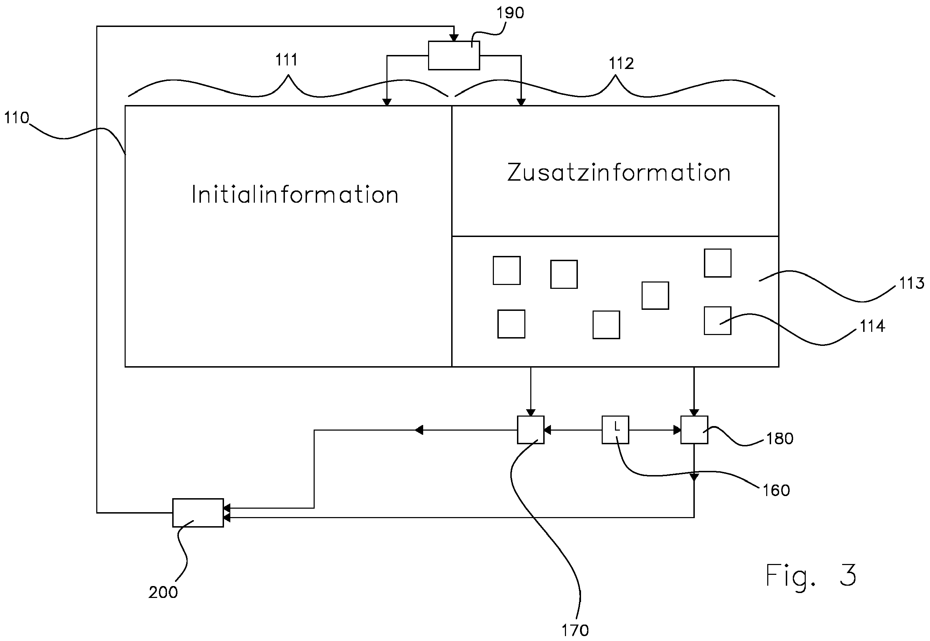

Gemäß der in Figur 3 dargestellten Ausführungsform der erfindungsgemäßen Vorrichtung 100 ist der editierbare zweite Speicherplatz 112 unterteilt in einen Inhalts-Speicherplatz, in den Zusatzinformationen zu den auf dem ersten Speicherplatz 111 gespeicherten Informationen in Form von Ergänzungs-Informationen der auf dem ersten Speicherplatz 111 gespeicherten Informationen einlesbar sind, und einen Bewertungs-Speicherplatz 113, in den qualitative Bewertungen der auf dem zweiten Speicherplatz 112 gespeicherten Ergänzungs-Informationen seitens der Nutzer-Teilnehmer einlesbar sind, wobei mindestens eine Berechnungs-Einrichtung 170 vorgesehen ist, um aufgrund eingelesener qualitativer Bewertungen eine Schwarm-Bewertungs-Information zu erstellen.

Die mindestens eine weitere Berechnungs-Einrichtung 170 ist ausgelegt, um eine qualitative Schwarm-Bewertung mittels einer jedem Nutzer-Teilnehmer in den zweiten Speicherplatz 112 ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher 114 speicherbar sind. Die Punkteskala ist ebenfalls bemessen, um eine Vergabe von Punkten zwischen 0 und 100 seitens eines jeden der Nutzer-Teilnehmer zu gewährleisten.

Dabei ist eine fünfte Berechnungs-Einrichtung 210 vorgesehen, die eine Mittelwertbildung bezüglich der summarisch auf dem zweiten Speicherplatz 112 eingelesenen, von jeweils n unterschiedlichen Nutzer-Teilnehmern vergebenen Punkte vornimmt und die betreffende Zahl in dem zweiten Speicherplatz 112 speichert, wobei ein Punkte-Mittelwert berechnet wird durch Addition aller Punkte zwischen 0 und 100, die n Nutzer-Teilnehmer im Wege einer jeweiligen Bewertung einer Korrektur-Information vergeben haben, geteilt durch die Anzahl von n Nutzer-Teilnehmern, die jeweils eine Bewertung einer Korrektur-Information abgegeben haben.

Des weiteren ist eine sechste Berechnungs-Einrichtung 220 vorgesehen, die eine Varianzbildung bezüglich der summarisch auf dem zweiten Speicherplatz 112 eingelesenen, von jeweils unterschiedlichen Nutzer-Teilnehmern vergebenen Punkte vornimmt und die betreffende Zahl in dem zweiten Speicherplatz 112 speichert, wobei die Varianz als mittlere Punkte-Differenz zu dem seitens der fünften Berechnungs-Einrichtung 210 ermittelten Punkte-Mittelwert der Bewertung einer Korrektur-Information definiert ist.

Eine dritte Kopier-Einrichtung 240 ist vorgesehen, die sukzessive hintereinander am Endpunkt vorgebbarer Zeitabschnitte die auf dem zweiten Speicherplatz 112 gespeicherten qualitativen Bewertungen einer Korrektur-Information abhängig von vorherbestimmten Vorgaben betreffend Mittelwert und Varianz in einer ersten Entscheider-Einrichtung 200 als nützliche oder unnützliche Informationen interpretiert und die Korrektur-Information im Falle des Ermittelns einer nützlichen Information auf den ersten Speicherplatz 111 überträgt und die diesbezüglichen vorherigen Informationen auf dem ersten Speicherplatz 111 überschreibt. Auf diese Weise ist eine Evaluations-Information bezüglich einer Korrektur-Information geschaffen.

Auch hier ist eine Zeitgeber-Einrichtung 160 vorgesehen, die in vorgebbaren konstanten Zeitabschnitten an die fünfte 210 und sechste Berechnungs-Einrichtung 220 sowie die dritte Kopier-Einrichtung 240 Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

Das oben erläuterte Ausführungsbeispiel der Erfindung dient lediglich dem Zweck eines besseren Verständnisses der durch die Ansprüche vorgegebenen erfindungsgemäßen Lehre, die als solche durch das Ausführungsbeispiel nicht eingeschränkt ist.

## Patentansprüche

1. Mit einer Mehrzahl mittels einer Kennung identifizierbarer Nutzer-Teilnehmer vernetzbare web-platzierte Plattform-Vorrichtung (100) zum Sammeln und Bearbeiten von auf einer Mehrzahl von jeweils mittels einer vorgebbaren Kodierung identifizierbaren und jeweils einem vorgegebenen Thema zugeordneten Speicherplätzen (110) einer Plattform gespeicherten Informationen seitens der Nutzer-Teilnehmer, **dadurch gekennzeichnet, dass** die in eine Mehrzahl von Themen unterteilten Speicherplätze (110) auf der Plattform jeweils von einer dualen Einheit (DuU) gebildet sind, wobei eine duale Einheit (DuU) jeweils einen einem vorgebbaren Thema zugeordneten, mit seitens eines Initial-Teilnehmers formulierten und seitens eines einzelnen Nutzer-Teilnehmers nicht editierbaren Initial-Informationen versehenen ersten Speicherplatz (111) sowie einen dem ersten Speicherplatz (111) zugeordneten zweiten Speicherplatz (112) umfasst, der seitens eines einzelnen Nutzer-Teilnehmers editierbar ist und für eine Eingabe weiterer Informationen bezüglich der auf dem ersten Speicherplatz (111) gespeicherten Information seitens der Mehrzahl von Nutzer-Teilnehmern ausgelegt ist, wobei
- in dem editierbaren zweiten Speicherplatz (112) Zusatz-Informationen in Form mittels mindestens einer Berechnungs-Einrichtung (120) ermittelter, qualitativer Bewertungen der auf dem ersten Speicherplatz (111) gespeicherten Informationen seitens der Nutzer-Teilnehmer einlesbar und jeweils in einem betreffenden Speicher speicherbar sind, wobei die mindestens eine Berechnungs-Einrichtung (120) ausgelegt ist, um aufgrund eingelesener qualitativer Einzel-Bewertungen eine Schwarm-Bewertungs-Information zu erstellen,
- die mindestens eine Berechnungs-Einrichtung (120) ausgelegt ist, um eine qualitative Bewertung mittels einer jedem Nutzer-Teilnehmer in den zweiten Speicherplatz (112) ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher (114) speicherbar sind,
- die Punkteskala ausgelegt ist, um eine Vergabe von Punkten zwischen 0 und 100 seitens eines jeden der Nutzer-Teilnehmer zu ermöglichen,
- eine erste Berechnungs-Einrichtung (120) vorgesehen ist, die eine Mittelwertbildung bezüglich der summarisch auf dem zweiten Speicherplatz (112) eingelesenen, von jeweils n unterschiedlichen Nutzer-Teilnehmern vergebenen Punkte vornimmt und die betreffende Zahl in dem zweiten Speicherplatz (112) speichert, wobei ein Punkte-Mittelwert berechnet wird durch Addition aller Punkte zwischen 0 und einer maximalen Punktezahl, die n Nutzer-Teilnehmer im Wege einer jeweiligen Bewertung vergeben haben, geteilt durch die Anzahl von n Nutzer-Teilnehmern, die jeweils eine Bewertung abgegeben haben,
- eine zweite Berechnungs-Einrichtung (130) vorgesehen ist, die eine Varianzbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei die Varianz als mittlere Punkte-Differenz zu dem seitens der ersten Berechnungs-Einrichtung (120) ermittelten Punkte-Mittelwert definiert ist.
1, 2, 3, 4, 5, 6

2. Vorrichtung nach Anspruch 1, **dadurch gekennzeichnet, dass** eine erste Kopier-Einrichtung (150) vorgesehen ist, die sukzessive hintereinander die innerhalb vorgebbarer Zeitabschnitte auf dem zweiten Speicherplatz (112) gespeicherten qualitativen Bewertungen als nützliche Informationen interpretiert und auf den ersten Speicherplatz (111) überträgt und die diesbezüglichen vorherigen Informationen auf dem ersten Speicherplatz (111) überschreibt.

3. Vorrichtung nach einem der Ansprüche 1 oder 2, **dadurch gekennzeichnet, dass** eine Zeitgeber-Einrichtung (160) vorgesehen ist, die in vorgebbaren konstanten Zeitabschnitten an die erste (120) und zweite Berechnungs-Einrichtung (130) sowie die erste Kopier-Einrichtung (150) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

4. Vorrichtung nach Anspruch 1, **dadurch gekennzeichnet, dass** der editierbare zweite Speicherplatz (112) untereilt ist in einen Inhalts-Speicherplatz, in den Zusatzinformationen zu den auf dem ersten Speicherplatz (111) gespeicherten Informationen in Form von Ergänzungs-Informationen der auf dem ersten Speicherplatz (111) gespeicherten Informationen einlesbar sind, und einen Bewertungs-Speicherplatz (113), in den qualitative Bewertungen der auf dem zweiten Speicherplatz (112) gespeicherten Ergänzungs-Informationen seitens der Nutzer-Teilnehmer einlesbar sind, wobei mindestens eine Berechnungs-Einrichtung (120) vorgesehen ist, um aufgrund eingelesener qualitativer Bewertungen eine Schwarm-Bewertungs-Information zu erstellen.

5. Vorrichtung nach Anspruch 4, **dadurch gekennzeichnet, dass** die mindestens eine weitere Berechnungs-Einrichtung (130) ausgelegt ist, um eine qualitative Schwarm-Bewertung mittels einer jedem Nutzer-Teilnehmer in den zweiten Speicherplatz (112) ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher (114) speicherbar sind.

6. Vorrichtung nach Anspruch 5, **dadurch gekennzeichnet, dass** die Punkteskala ausgelegt ist, um eine Vergabe von Punkten zwischen 0 und 100 seitens eines jeden der Nutzer-Teilnehmer zu ermöglichen.

7. Vorrichtung nach Anspruch 6, **dadurch gekennzeichnet, dass** eine dritte Berechnungs-Einrichtung (170) vorgesehen ist, um eine Mittelwertbildung bezüglich der summarisch auf dem zweiten Speicherplatz (112) eingelesenen, von jeweils n unterschiedlichen Nutzer-Teilnehmern vergebenen Punkte durchzuführen und die betreffende Zahl in dem zweiten Speicherplatz (112) speichert, wobei ein Punkte-Mittelwert berechnet wird durch Addition aller Punkte zwischen 0 und einer maximalen Punktezahl, die n Nutzer-Teilnehmer im Wege einer jeweiligen Bewertung einer Ergänzungs-Information vergeben haben, geteilt durch die Anzahl von n Nutzer-Teilnehmern, die jeweils eine Bewertung einer Ergänzungs-Information abgegeben haben.

8. Vorrichtung nach einem der Anspruch 7, **dadurch gekennzeichnet, dass** eine vierte Berechnungs-Einrichtung (180) vorgesehen ist, die eine Varianzbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei die Varianz als mittlere Punkte-Differenz zu dem seitens der dritten Berechnungs-Einrichtung (170) ermittelten Punkte-Mittelwert der Bewertung einer Ergänzungs-Information definiert ist.

9. Vorrichtung nach den Ansprüchen 7 und 8, **dadurch gekennzeichnet, dass** eine zweite Kopier-Einrichtung (190) vorgesehen ist, die sukzessive hintereinander am Endpunkt vorgebbarer Zeitabschnitte die auf dem zweiten Speicherplatz (112) gespeicherten qualitativen Bewertungen einer Ergänzungs-Information abhängig von vorherbestimmten Vorgaben betreffend Mittelwert und Varianz in einer ersten Entscheider-Einrichtung (200) als nützliche oder unnützliche Informationen interpretiert und die Ergänzungs-Information im Falle des Ermittelns einer nützlichen Information auf den ersten Speicherplatz (111) überträgt.

10. Vorrichtung nach den Ansprüchen 8 und 9, **dadurch gekennzeichnet, dass** eine Zeitgeber-Einrichtung (160) vorgesehen ist, die in vorgebbaren konstanten Zeitabschnitten an die dritte (170) und vierte Berechnungs-Einrichtung (180) sowie die zweite Kopier-Einrichtung (190) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

11. Vorrichtung nach Anspruch 1, **dadurch gekennzeichnet, dass** der editierbare zweite Speicherplatz (112) unterteilt ist in einen Inhalts-Speicherplatz, in den Zusatzinformationen zu den auf dem ersten Speicherplatz (111) gespeicherten Informationen in Form von Korrektur-Informationen der auf dem ersten Speicherplatz (111) gespeicherten Informationen einlesbar sind, und einen Bewertungs-Speicherplatz (113), in den qualitative Bewertungen der auf dem zweiten Speicherplatz (112) gespeicherten Korrektur-Informationen einlesbar sind, wobei mindestens eine Berechnungs-Einrichtung (210) vorgesehen ist, um aufgrund eingelesener qualitativer Bewertungen eine Schwarm-Bewertungs-Information zu erstellen.

12. Vorrichtung nach Anspruch 11, **dadurch gekennzeichnet, dass** die mindestens eine weitere Berechnungs-Einrichtung (220) ausgelegt ist, um eine qualitative Bewertung mittels einer jedem Nutzer-Teilnehmer in den zweiten Speicherplatz (112) ermöglichte Eingabe individuell zu vergebender Punkte einer Punkteskala mit vorherbestimmter Punktemenge durchzuführen, wobei für jede Eingabe die vergebenen Punkte in einem betreffenden Punktespeicher (114) speicherbar sind.

13. Vorrichtung nach Anspruch 12, **dadurch gekennzeichnet, dass** die Punkteskala ausgelegt ist, um eine Vergabe von Punkten zwischen 0 und 100 seitens eines jeden der Nutzer-Teilnehmer zu ermöglichen.

14. Vorrichtung nach Anspruch 13, **dadurch gekennzeichnet, dass** die fünfte Berechnungs-Einrichtung (210) vorgesehen ist, um eine Mittelwertbildung bezüglich der summarisch auf dem zweiten Speicherplatz (112) eingelesenen, von jeweils n unterschiedlichen Nutzer-Teilnehmern vergebenen Punkte durchzuführen und die betreffende Zahl in dem zweiten Speicherplatz (112) speichert, wobei ein Punkte-Mittelwert berechnet wird durch Addition aller Punkte zwischen 0 und einer maximalen Punktezahl, die n Nutzer-Teilnehmer im Wege einer jeweiligen Bewertung einer Korrektur-Information vergeben haben, geteilt durch die Anzahl von n Nutzer-Teilnehmern, die jeweils eine Bewertung einer Korrektur-Information abgegeben haben.

15. Vorrichtung nach Anspruch 14, **dadurch gekennzeichnet, dass** eine sechste Berechnungs-Einrichtung (220) vorgesehen ist, die eine Varianzbildung bezüglich der summarisch auf dem zweiten Speicherplatz (112) eingelesenen, von jeweils unterschiedlichen Nutzer-Teilnehmern vergebenen Punkte vornimmt und die betreffende Zahl in dem zweiten Speicherplatz (112) speichert, wobei die Varianz als mittlere Punkte-Differenz zu dem seitens der fünften Berechnungs-Einrichtung (210) ermittelten Punkte-Mittelwert der Bewertung einer Korrektur-Information definiert ist.

16. Vorrichtung nach den Ansprüchen 14 und 15, **dadurch gekennzeichnet, dass** eine dritte Kopier-Einrichtung (240) vorgesehen ist, die sukzessive hintereinander am Endpunkt vorgebbarer Zeitabschnitte die auf dem zweiten Speicherplatz (112) gespeicherten qualitativen Bewertungen einer Korrektur-Information abhängig von vorherbestimmten Vorgaben betreffend Mittelwert und Varianz in einer ersten Entscheider-Einrichtung (200) als nützliche oder unnützliche Informationen interpretiert und die Korrektur-Information im Falle des Ermittelns einer nützlichen Information auf den ersten Speicherplatz (111) überträgt und die diesbezüglichen vorherigen Informationen auf dem ersten Speicherplatz (111) überschreibt.

17. Vorrichtung nach den Ansprüchen 15 und 16, **dadurch gekennzeichnet, dass** eine Zeitgeber-Einrichtung (160) vorgesehen ist, die in vorgebbaren konstanten Zeitabschnitten an die fünfte (210) und sechste Berechnungs-Einrichtung (220) sowie die dritte Kopier-Einrichtung (190) Reset-Signale sendet, um die betreffenden Einrichtungen nach Ablauf eines jeweiligen vorgebbaren Zeitabschnittes auf Null zu setzen und die jeweils zugewiesene Funktion in einem jeweils nachgeordneten folgenden Zeitabschnitt gleicher Länge zu wiederholen.

18. Vorrichtung nach einem der vorhergehenden Ansprüchen, **dadurch gekennzeichnet, dass** jedem der Teilnehmer eine Erstplatzierung einer dualen Einheit mit erstem (111) und zweitem Speicherplatz (112) ermöglicht ist.
